# EUROPEAN PATENT APPLICATION

(11) **EP 2 868 443 A2**
(43) Date of publication of application: **06.05.2015**
(21) Application number: 14190860.8
(22) Date of filing: 29.10.2014
(51) Int. Cl.: B25J 9/16

(54) **Robot, robot system, and robot control apparatus**

(30) Priority: 31.10.2013 JP 2013226547
(71) Applicant: Seiko Epson Corporation, Tokyo 163-0811 (JP)
(72) Inventor: Karito, Nobuhiro, Nagano, 392-8502 (JP); Noda, Takahiko, Nagano, 392-8502 (JP)
(74) Representative: Hoffmann Eitle

(57) **Abstract**

A first finger portion (112, 112a) and a second finger portion (112, 112b) of an end effector (110) are brought close to each other, and when the first finger portion (112, 112a) is brought into contact with an object to be grasped, an arm (11) is moved in a direction where the first finger portion (112, 112a) is provided while the contact between the first finger portion (112, 112a) and the object to be grasped is kept.

## Description

### BACKGROUND

### 1. Technical Field

The present invention relates to robots, robot systems and robot control units as well as method of controlling a robot.

### 2. Related Art

JP-A-2012-236237 discloses a robot hand. In the robot hand, a contact sensing finger is provided among a plurality of fingers and senses contact with the object. A base on which the plurality of fingers are provided detects resultant reaction force from the respective fingers. Under conditions of no resultant reaction force detected, the plurality of fingers are moved toward the object, and when the contact sensing finger comes into contact with the object, the driving force of the plurality of fingers is switched to the force corresponding to grasp force. In addition, when the contact sensing finger has not come into contact with the object but a resultant reaction force is detected, the driving of the plurality of fingers is halted and a position of the base is corrected in a direction where the resultant reaction force is not detected any more.

JP-A-2012-236237 is an example of related art.

In general, a robot for a work (work object) is demanded to grasp the work by moving its hand to a specific position of the work based on information on an image photographed by a camera. However, there is an error between the position of the work acquired based on information on an image photographed by a camera and the actual position of the work or between a position designated to the robot and the actual position of the hand, and the center of the hand and the center position of the work are not always matched.

According to the disclosure of JP-A-2012-236237, when one finger is brought into contact with an object earlier than other fingers due to an error, positional correction is performed such that the center of an object may be matched with the center of a base of the robot hand before grasping the object with fingers. However, performing such positional correction on a robot such that the center of an object may be matched with the center of a base of a robot hand may require accurate information on a form of the object as well as time.

### SUMMARY

It is the object underlying the invention to provide a robot, a robot system and a robot control unit which allow correctly grasping an object in a short period of time without requiring information on a form of the object, and a corresponding method of controlling a robot.

A first aspect of the invention is directed to a robot including a robot body, an arm provided on the robot body, an end effector provided at a distal end of the arm and having a first finger portion and a second finger portion, a force detecting unit that detects a force applied to the end effector, and a control unit that controls the arm and the end effector based on the force detected by the force detecting unit. In this case, the control unit brings the first finger portion and the second finger portion close to each other, and when the first finger portion is brought into contact with an object to be grasped, moves the arm in a direction where the first finger portion is provided while the contact between the first finger portion and the object to be grasped is kept.

According to the first aspect, the first finger portion and the second finger portion of the end effector are brought close to each other, and when the first finger portion is brought into contact with an object to be grasped, the arm is moved in a direction where the first finger portion is provided while the contact between the first finger portion and the object to be grasped is kept. Thus, the center of the arm and the center position of the object to be grasped may be brought close to each other without information regarding a shape of the object. As a result, the object may be grasped correctly in a short period of time.

The force detecting unit may be a force sensor provided at a distal end of the arm. Thus, a force applied to the first finger portion may be detected by one sensor.

The control unit may grasp the object to be grasped by symmetrically closing the first finger portion and the second finger portion. Thus, whether the object to be grasped has been grasped or not may be determined based on grasping forces of the first finger portion and the second finger portion.

Each of the first finger portion and the second finger portion may have a contact sensor that detects a contact with the object to be grasped. Thus, whether the object to be grasped has been grasped by the first finger portion and the second finger portion or not may be securely detected. The contact sensor may be functioned as a force detecting unit.

The control unit may end control after a lapse of a predetermined period of time from when the first finger portion and the second finger portion are brought close to each other and grasp the object to be grasped. Thus, the control may be ended after vibrations of the arm and so on go down and are stabilized.

A second aspect of the invention is directed to a robot system including a robot having a robot body, an arm provided on the robot body, an end effector provided at a distal end of the arm and having a first finger portion and a second finger portion, and a force detecting unit that detects a force applied to the end effector, and a control unit that drives the arm and the end effector based on the force detected by the force detecting unit. In this case, the control unit brings the first finger portion and the second finger portion close to each other, and when the first finger portion is brought into contact with an object to be grasped, moves the arm in a direction where the first finger portion is provided while the contact between the first finger portion and the object to be grasped is kept. Thus, the center of the arm and the center position of the object to be grasped may be brought close to each other without information regarding a shape of the object. As a result, the object may be grasped correctly in a short period of time.

A third aspect of the invention is directed to a robot control unit configured for controlling a robot having an arm provided on the robot body, an end effector provided at a distal end of the arm and having a first finger portion and a second finger portion, and a force detecting unit configured to detect a force applied to the end effector, in which the first finger portion and the second finger portion are brought close to each other, a contact between the first finger portion and an object to be grasped is detected based on a force detected by the force detecting unit, and when the first finger portion is brought into contact with the object to be grasped, the arm is moved in a direction where the first finger portion is provided while the contact between the first finger portion and the object to be grasped is kept. Thus, the center of the arm and the center position of the object to be grasped may be brought close to each other without information regarding a shape of the object. As a result, the object may be grasped correctly in a short period of time. It should be noted that the robot may be included in the robot system.

A fourth aspect of the invention is directed to a method of controlling a robot as recited in claim 13.

### BRIEF DESCRIPTION OF THE DRAWINGS

The invention will be described with reference to the accompanying drawings, wherein like numbers reference like elements.
Fig. 1 is a front perspective view of a robot according to a first embodiment of the invention.
Fig. 2 is a back perspective view of the robot.
Fig. 3 is a functional block diagram of a control unit.
Fig. 4 illustrates a state before grasping an object.
Fig. 5 is a block diagram illustrating an example of a schematic configuration of the control unit.
Fig. 6 is a flowchart illustrating a flow of processing to be performed by the robot for grasping an object.
Figs. 7A and 7B illustrate how an object is grasped.

### DESCRIPTION OF EXEMPLARY EMBODIMENTS

An embodiment of the invention will be described with drawings.

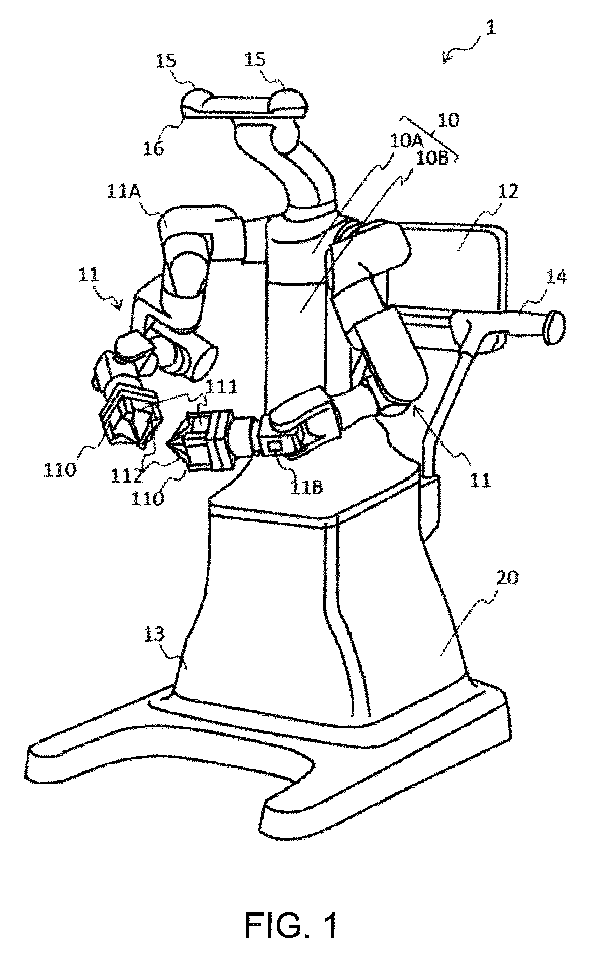

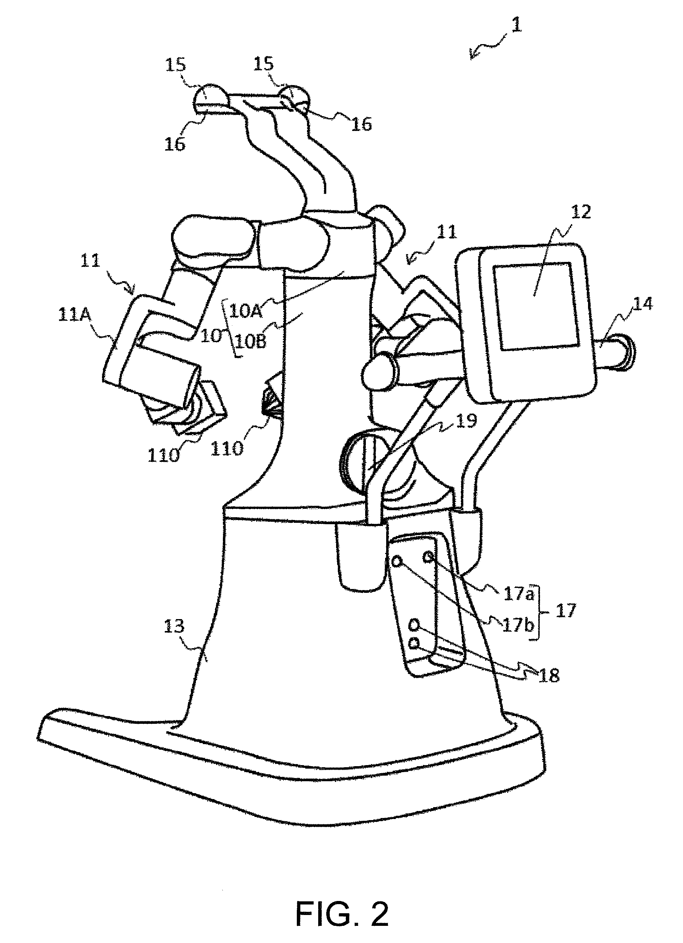

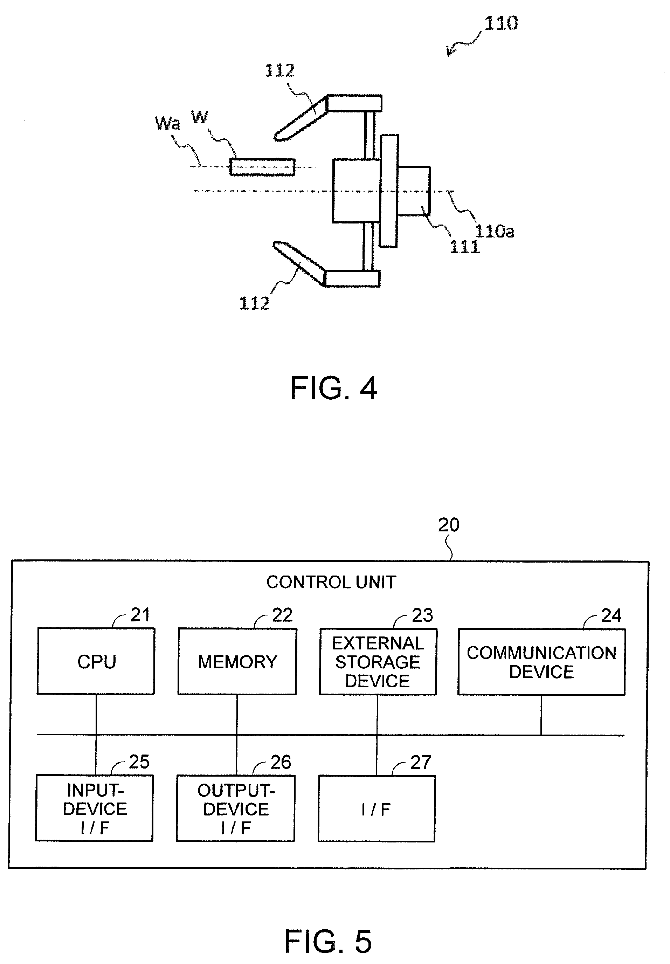

Fig. 1 is a front perspective view of a robot 1 according to an embodiment of the invention. Fig. 2 is a back perspective view of the robot 1. The robot 1 according to this embodiment mainly includes a trunk part 10, arms 11, a touch panel monitor 12, a leg part 13, a conveying handle 14, a camera 15, a signal light 16, a power supply switch 17, an external I/F unit 18, and an up/down handle 19. The robot 1 is a human type dual arm robot and performs a process in accordance with a control signal from a control unit 20 (see Fig. 4). The robot 1 may be applicable to a manufacturing process for manufacturing a precision apparatus such as a watch. It should be noted that manufacturing operations in this case may generally be performed on a work table.

Hereinafter, the upper sides of Figs. 1 and 2 will be called "upper" or "upper part" and the lower sides will be called "lower" or "lower part", for convenience of description. The near side of Fig. 1 will be called "front side" or "front", and the near side of Fig. 2 will be called "back side" or "back".

The trunk part 10 has a shoulder area 10A and a trunk body 10B. The trunk part 10 corresponds to a robot body according to the invention. The shoulder area 10A is provided above the trunk body 10B. The arms 11 (what is called manipulators) are provided near upper ends of both side surfaces of the shoulder area 10A.

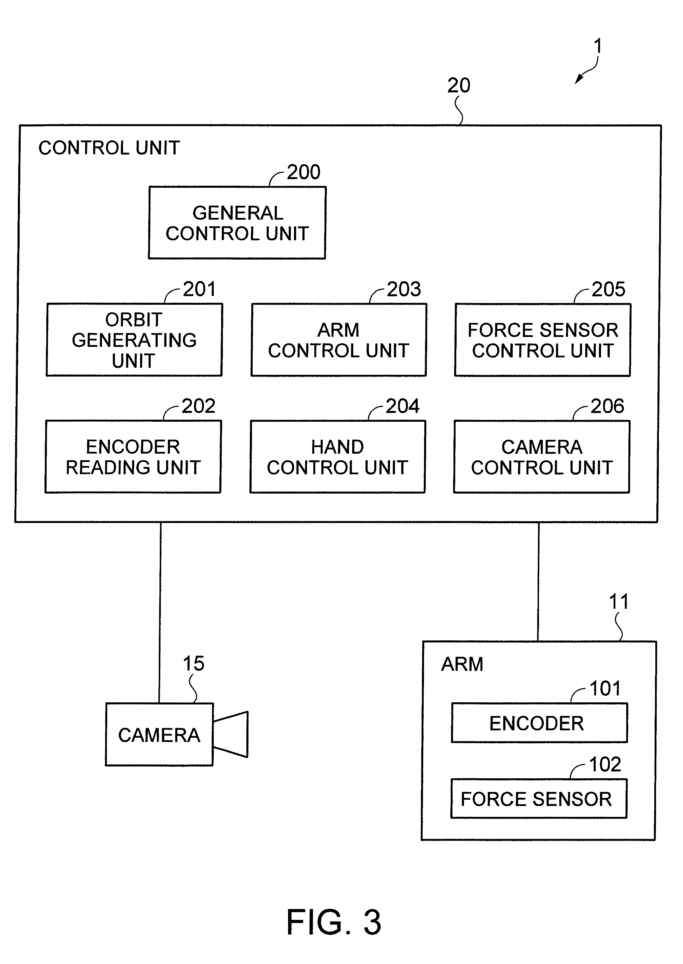

Each of the arms 11 has a plurality of arm members 11A connected through joints (not shown). The joints have actuators (not shown) for operating the joints. Each of the actuators may include an encoder 101 (see Fig. 3), for example. The encoder 101 outputs an encoder value to be used for feedback control over the robot 1 by the control unit 20. The actuator further includes an electro-magnetic brake configured to fix a rotating shaft. The arm members 11A correspond to manipulator members according to the invention.

It should be understood that the arms 11 are not limitedly provided in the robot 1. For example, a manipulator may be provided which includes a plurality of joints and links. In this case, the joints may be moved to move the manipulator as a whole.

Each of the arms 11 has a hand-eye coordination camera 11B to capture an image of an object mounted on a work table.

A force sensor, not illustrated, is provided at a distal end of each of the arms 11. The force sensor may be a sensor configured to detect force or moment received as counterforce against force exerted by the robot 1. The force sensor may be a 6 axis force sensor capable of simultaneously detecting 6 components including force components in translational 3 axis directions and moment components around rotational 3 axes, for example. It should be noted that the force sensor are not limited to such a 6-axis sensor but may be a 3-axis sensor, for example. The force sensor corresponds to a force detecting unit according to the invention.

A hand 110 (what is called an "end effector") is provided at the distal end of each of the arms 11. The hand 110 is configured to grasp a work W or a tool. The arms 11 have an end point at a position where the hands 110 are provided.

Each of the hands 110 mainly has a body 111 and four fingers 112 provided in the body 111. The fingers 112 are configured such that opposing two fingers 112 may close or open simultaneously and symmetrically.

It should be noted that the end effectors are not limited to the hands 110. For example, each of the hands 110 may only require two fingers 112 while the four fingers 112 are provided as described above.

A part corresponding to a head projecting from the shoulder area 10A has a camera 15 having a CCD (Charge Coupled Device), a CMOS (Complementary Metal Oxide Semiconductor) and so on and a signal light 16. The camera 15 captures an image including a work area defined on a work table T (see Fig. 3). The signal light 16 may have LEDs configured to individually emit a red light beam, an yellow light beam and a blue light beam, for example. The LED or LEDs may be selected to emit the corresponding light beam or beams as required in accordance with the current state of the robot 1.

The trunk body 10B is provided on a frame of the leg part 13. The leg part 13 is a base of the robot, and the trunk part 10 is the trunk of the robot.

An up/down handle 19 is provided on the back surface of the trunk body 10B. The up/down handle 19 is used to move the shoulder area 10A vertically about the trunk body 10B. Thus, the robot 1 may be applicable to work tables having various heights.

A touch panel monitor 12 is provided on the back side of the trunk body 10B and has a monitor that is visible from the back side of the robot 1. The monitor may be a liquid crystal monitor and may display a current state of the robot 1, for example. The liquid crystal monitor may have a touch panel function and may be used as an operation unit usable for defining an operation to be performed on the robot 1.

A power supply switch 17, a control unit 20 and an external I/F unit 18 are provided on the back surface of the leg part 13. The external I/F unit 18 is an external connection terminal for connection of an external PC. The power supply switch 17 has a power supply ON switch 17a and a power supply OFF switch 17b. The power supply ON switch 17a is usable for powering on the robot 1, and the power supply OFF switch 17b is usable for powering off the robot 1.

The leg part 13 internally contains the control unit 20 which controls the robot 1 itself. The leg part 13 further internally contains a rotating shaft and the shoulder area 10A. The rotating shaft projects upward and is provided along the longitudinal direction of the trunk body 10B. The shoulder area 10A is provided on the rotating shaft.

A plurality of casters are provided at a lowermost region of the leg part 13 and are horizontally spaced from each other. This allows an operator to push the conveyance handle 14 for moving and conveying the robot 1. It should be noted that one including the trunk part 10 and leg part 13 may correspond to the robot body according to the invention.

While the control unit 20 is internally contained in the leg part 13 according to this embodiment, the control unit 20 may be provided externally to the robot 1. When the control unit 20 is provided externally to the robot 1, the control unit 20 may be connected with the robot 1 in a wired or wireless manner.

Next, an example of a functional configuration of the robot 1 will be described. Fig. 3 illustrates a functional block diagram of the control unit 20.

The control unit 20 mainly includes a general control unit 200, an orbit generating unit 201, an encoder reading unit 202, an arm control unit 203, a hand control unit 204, a force sensor control unit 205, and a camera control unit 206.

The general control unit 200 performs processing for generally controlling the control unit 20. The general control unit 200 may receive an input from the touch panel monitor 12, for example, and output an instruction to the corresponding unit.

The orbit generating unit 201 generates an orbit of an end point based on an image captured by the camera 15 and acquired by the camera control unit 206. More specifically, the orbit generating unit 201 recognizes the position of an object (work) to be grasped from the image acquired by the camera control unit 206 and replaces the position of the work by robot coordinates. The orbit generating unit 201 generates a path for moving the robot coordinates of the current end point to the robot coordinates of the work. Because the orbit generating unit 201 performs general processing, the detail description will be omitted.

The encoder reading unit 202 may acquire information on an encoder angle, for example, from the encoder 101 and outputs it to the arm control unit 203.

The arm control unit 203 controls the arms 11 (positional control) based on the orbit generated by the orbit generating unit 201 and the information on the encoder 101 acquired by the encoder reading unit 202. The arm control unit 203 controls the arms 11 (force control) based on the information acquired by the force sensor control unit 205. Because the arm control unit 203 performs general processing, the description will be omitted. It should be noted that the arm control unit 203 may move the position of an end point by using a visual servo, instead of the positional control.

The arm control unit 203 outputs a signal for controlling the hands 110 to the hand control unit 204 after moving the end point to a target position.

The hand control unit 204 outputs to the hands 110 a signal for causing them to perform an operation based on the image captured by the camera 15 and acquired by the camera control unit 206.

However, due to bending of the arms 11, for example, the position of the end point (or the hands 110) after being moved to the arm control unit 203 may be misaligned from the position of the work W. In an example illustrated in Fig. 4, a central axis 110a of the hand 110 may be misaligned from the center Wa of the work. When the central axis 110a of the hand 110 and the center Wa of the work are misaligned, one finger 112 may be abutted against the work earlier than the other fingers 112. As a result, the work may not be grasped precisely by the hand 110.

According to this embodiment, when the central axis 110a of the hand 110 and the center Wa of the work are misaligned, that is, when a signal from the force sensor 102 is acquired by the general control unit 200, the general control unit 200 outputs instructions to the arm control unit 203 and hand control unit 204 to perform a grasping operation in a manner that the difference between the central axis 110a of the hand 110 and the center Wa of the work may be eliminated. The processing to be performed by the arm control unit 203 and hand control unit 204 will be described in detail below.

The force sensor control unit 205 may acquire information on a value and a direction of force measured by the force sensor 102.

The camera control unit 206 acquires images captured by the camera 15 and hand-eye coordination camera 11B. The camera control unit 206 may perform image processing such as extracting a work from the acquired image.

Fig. 5 is a block diagram illustrating a schematic configuration of the control unit 20. As illustrated in Fig. 5, the control unit 20 configured by a computer, for example, includes a CPU (Central Processing Unit) 21 being an arithmetic unit, a memory 22 including a RAM (Random Access Memory) being a volatile storage device and a ROM (Read only Memory) being non-volatile storage device, an external storage device 23, a communication device 24 usable for communication with an external apparatus such as the robot 1, an input-device interface (I/F) 25 usable for connecting an input device such as a touch panel monitor, an output-device I/F 26 usable for connecting an output device such as the touch panel monitor 12, and an I/F 27 usable for connecting the control unit 20 and other units.

These functional units may be implemented by the CPU 21 by reading a predetermined program stored in the memory 22 and executing, for example. It should be noted that such a predetermined program may be preinstalled in the memory 22 or may be downloaded and installed or updated from a network through the communication device 24, for example.

This configuration of the robot 1 is given as a main configuration for describing characteristics of this embodiment, and an aspect of the invention is not limited to the configuration. Furthermore, configurations included in general robot systems are not excluded.

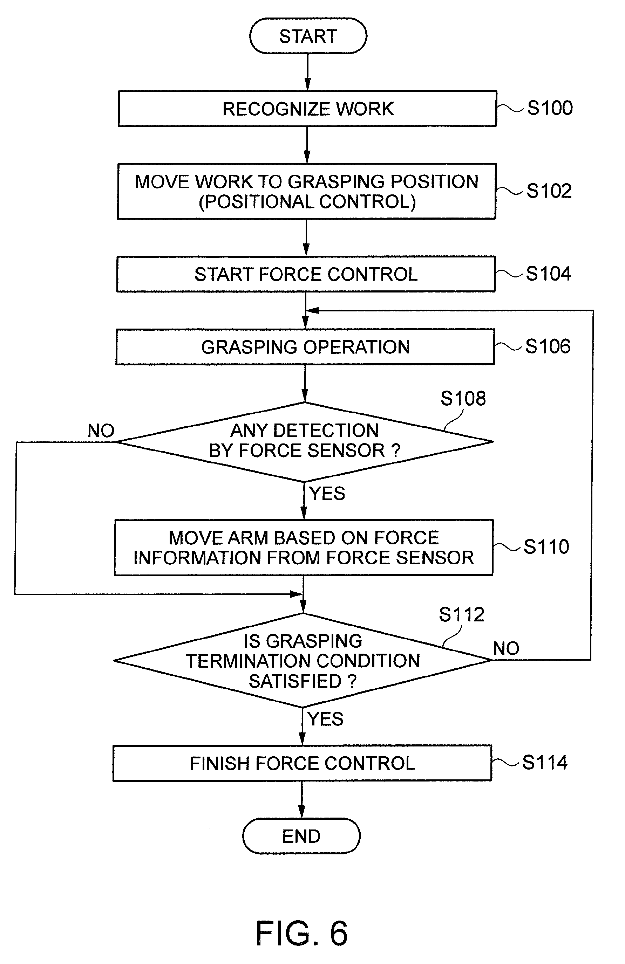

Next, characteristic processing of the robot 1 including the configuration according to this embodiment will be described. Fig. 6 is a flowchart illustrating a processing flow to be performed by the robot 1 for performing a grasping operation. The processing illustrated in Fig. 6 is started in response to a work start instruction input to the control unit 20 through the touch panel monitor 12, for example.

The camera control unit 206 acquires an image captured by the camera 15 and recognizes the position of a work W (step S100).

Next, the orbit generating unit 201 generates an orbit of an end point based on the position of the work W recognized in step S100. The arm control unit 203 moves the arm 11 to a position allowing the hand 110 to grasp the work W based on the orbit generated by the orbit generating unit 201 and the information on the encoder 101 acquired by the encoder reading unit 202 (see step S102, Fig. 4). Here, the hand 110 has an initial state where the fingers 112 are open.

When the arm 11 or hand 110 touches the work W when step S102 is being performed, the general control unit 200 ends the processing illustrated in Fig. 6 and may output the fact that an error occurs to the touch panel monitor 12. Whether the arm 11 or hand 110 has touched the work W or not may be determined based on a sensor value (such as a force or a direction) of the force sensor 102 acquired by the force sensor control unit 205 or an image acquired by the camera control unit 206.

After the arm is moved to the position allowing the hand 110 to grasp the work W, the arm control unit 203 ends the position control (step S102) and starts force control based on the sensor value (such as a force or a direction) of the force sensor 102 acquired by the force sensor control unit 205 (step S104).

The hand control unit 204 performs an operation for closing the fingers 112 (step S106). For example, the hand control unit 204 moves the fingers 112 such that the distance between the finger 112 and the finger 112 can be reduced by an arbitrary distance.

The general control unit 200 determines whether the force sensor control unit 205 has acquired the sensor value measured by the force sensor 102 or not (step S108).

If the force sensor control unit 205 has acquired the sensor value measured by the force sensor 102 (YES in step S108), the general control unit 200 instructs the arm control unit 203, and the arm control unit 203 moves the arm 11 based on the force information detected by the force sensor 102 (step S110).

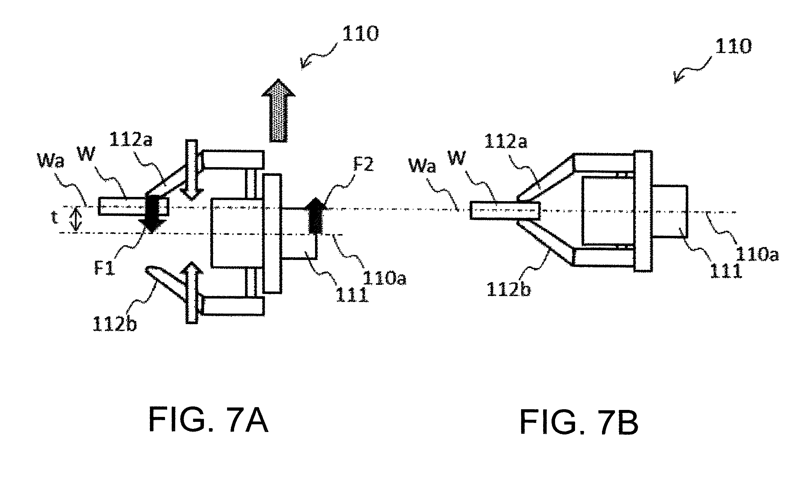

The processing in step S110 will be described with reference to Figs. 7A and 7B. Figs. 7A and 7B do not illustrate the arm 11 provided on the right-hand side of the hand 110.

As illustrated in Fig. 7A, when the central axis 110a of the hand 110 is misaligned from the center Wa of the work W, the finger 112 may be moved so as to close (see the hollow arrows in Fig. 7A). As a result, the finger 112a on the upper side of Fig. 7A touches the work W.

When the work W is not supported and is light-weighted enough, the center Wa of work W may be moved to the position of the central axis 110a of the hand 110. Then, the grasping operation ends.

However, normally, because the work W may be semi-fixed or the mass of the work W may be heavy, the work W may not be moved with the grasping force of the hand 110 (the closing force of the fingers 112). Thus, the grasping force of the hand 110 is continuously applied to the work W. Referring to Fig. 7A, the finger tip of the finger 112a is applying a force F1 downward in Fig. 7A to the work W (see the solid arrow in Fig. 7A).

In this state, a force F2 in the opposite direction of the force F1 (the solid arrow in Fig. 7A) is applied to a force sensor 102 (not illustrated in Figs. 7A and 7B) provided at the root of the hand 110 and is detected by the force sensor 102.

When the force sensor control unit 205 acquires the force (including direction information) detected by the force sensor 102, the arm control unit 203 moves the arm 11 in the same direction (direction away from the force) as the direction of the force F2 detected by the force sensor 102 until the force sensor 102 no longer detects a force (or the value acquired by the force sensor control unit 205 is 0) (see the shaded arrow in Fig. 7A). Thus, the positional error t between the work W and the hand 110 decreases.

In step S110, because the arm 11 is moved until the force sensor 102 no longer detects a force, the contact between the upper finger 112a and the work W is maintained. However, the contact position between the upper finger 112a and the work W may not always be kept at the same position, but the contact position between the upper finger 112a and the work W may shift while the arm 11 is being moved.

After exiting from step S110 or if the force sensor control unit 205 does not acquire a sensor value measured by the force sensor 102 (NO in step S108), the general control unit 200 determines whether a grasping termination condition is satisfied or not (step S112). The general control unit 200 may determine that the grasping termination condition is satisfied if the finger 112 has a width corresponding to the size of the work W on an image acquired by the camera control unit 206. The general control unit 200 may determine that the grasping termination condition is satisfied if the grasping force of the hand 110 is equal to or higher than a predetermined value. It should be noted that the grasping force of the hand 110 may be acquired from a torque of a motor for moving the fingers 112 (one motor for moving the fingers 112a, 112b).

If the grasping termination condition is not satisfied (NO in step S112), the general control unit 200 returns the processing to the step (step S106) for performing a grasping operation. The processing in steps S106 to S112 is repeated in short cycles (such as 1 second or shorter). Thus, until the forces of the upper and lower fingers 112a and 112b of the hand 110 to be applied to the work W are balanced, that is, until the arm 11 and hand 110 rest at a position without a positional error t (see Fig. 7A), as illustrated in Fig. 7B, the arm 11 keeps moving and the grasping operation of the hand 110 continues. In other words, the processing in steps S106 to S112 is repeated until the hand 110 grasps the work W (or until the grasping termination condition is satisfied).

If the grasping termination condition is satisfied (YES in step S112) or if the state illustrated in Fig. 7B is acquired, the general control unit 200 finishes the force control having started in step S104 simultaneously with the determination of the satisfaction of the grasping termination condition or after a lapse of a predetermined time (such as 0.5 seconds) from the determination of the satisfaction of the grasping termination condition (step S114), and the processing illustrated in Fig. 6 ends. The predetermined time is not limited to 0.5 seconds but may be any period of time enough for stopping the movement caused by vibrations of the arm 11 and hand 110 or the force applied to the driving actuator of the arm 11 and hand 110 is released due to inertia, for example.

Referring to the flowchart illustrated in Fig. 6, impedance control is preferably used as the force control to be started in step S104. Three parameters of a virtual spring constant, a mass, and a coefficient of viscosity may be required to set for the impedance control. In the grasping control, when the spring constant is set to 0 or a value close to 0, the arm 11 keeps moving in the direction away from the force detected by the force sensor 102 instead of being balanced. Thus, more grasping conditions may be addressed.

A speed corresponding to the force detected by the force sensor 102 may be set as the force control to be started in step S104, instead of the impedance control, for control such that the arm 11 may be moved at the set speed. However, this control is easily influenced by noise, and vibrations may occur easily. Therefore, use of the impedance control is desirable.

According to this embodiment, when the center of a work and the center of a hand are misaligned, the positions of the arms and hands may be adjusted based on information from a force sensor. Thus, the center of the work and the center of the hand may be brought more closely to each other. As a result, the grasping operation may be ended at a position, where the misalignment of the center of the work and the center of the hand is overcome, that is, at a position where the center of the work is matched with the center of the hand. Therefore, a grasping operation may be performed securely even when the center of the work and the center of the hand are misaligned. The term "matched" refers to a concept including an appropriately misaligned state by keeping identity if the centers are not strictly matched.

According to this embodiment, the force control is ended simultaneously with or immediately after the satisfaction of the grasping termination condition. Thus, the grasping operation may be performed highly efficiently without an unnecessary waiting time.

While a contact between the finger 112 and the work W is detected by the force sensor 102 according to this embodiment, an embodiment of the invention is not limited to detection with the force sensor 102. For example, the finger 112 may have a contact sensor (pressure sensor). When the contact sensor detects a contact, a state that the work W is grasped by the fingers 112 or a state that the finger 112 and the work W have brought into contact may be detected.

Providing a contact sensor in the fingers 112 may increase the security level. In step S112 illustrated in Fig. 6, if the grasping force of the hand 110 is equal to or higher than a predetermined value, the satisfaction of the grasping termination condition is determined. However, there is a possibility that the grasping force of the hand 110 is equal to or higher than a predetermined value even if one finger 112 is only abutted against the work W of some types. Such a possibility may be eliminated by providing a contact sensor to the fingers 112 so that whether all of the fingers 112 have in contact with the work W or not may be detected.

Providing a contact sensor to the fingers 112 may allow movement of the arm 11 so as to reduce a positional error t between the work W and the hand 110 without acquiring a value detected by the force sensor 102. For example, in the state illustrated in Fig. 7A, a contact sensor provided in the finger 112a may detect a contact while a contact sensor provided in the finger 112b may not detect a contact. A synthesized value of a detected value of the contact sensor provided in the finger 112a and a detected value of the contact sensor provided in the finger 112b may be handled equally to a sensor value detected by the force sensor 102 (see step S110 in Fig. 6). As a result, the arm 11 may be moved upward in Fig. 7A (see the shaded arrow in Fig. 7A) in the same manner as step S110 illustrated in Fig. 6.

While the invention has been described with reference to the embodiment, the technical scope of the invention is not limited to the scope according to the embodiment. It should be understood by a person skilled in the art that various changes or improvements may be made to the embodiment. It is apparent from the appended claims that embodiments with such a change or improvement are also included in the technical scope of the invention. Particularly, the invention may be provided as a robot system in which a robot, a control unit, and an imaging unit are provided separately or may be provided as a robot including a control unit. Alternatively, the invention may be provided as an apparatus including a control unit only or a control unit and an imaging unit. The invention may be provided as a program configured to control a robot and so on or as a storage medium storing such a program.

## Claims

1. A robot (1) comprising:
a robot body (10);
an arm (11) provided on the robot body (10);
an end effector (110) provided at a distal end of the arm (11) and having a first finger portion (112, 112a) and a second finger portion (112, 112b);
a force detecting unit that detects a force applied to the end effector (110); and
a control unit (20) that controls the arm (11) and the end effector (110) based on the force detected by the force detecting unit,
wherein the control unit (20) is configured so as to bring the first finger portion (112, 112a) and the second finger portion (112, 112b) close to each other, and when the first finger portion (112, 112a) is brought into contact with an object (W) to be grasped, to move the arm (11) in a direction where the first finger portion (112, 112a) is provided while keeping the contact between the first finger portion (112, 112a) and the object (W) to be grasped.

2. The robot (1) according to claim 1, wherein the force detecting unit is a force sensor (102) provided at a distal end of the arm (11).

3. The robot (1) according to claim 1 or 2, wherein the control unit (20) is configured for grasping the object (W) to be grasped by symmetrically closing the first finger portion (112, 112a) and the second finger portion (112, 112b).

4. The robot (1) according to any one of claims 1 to 3, wherein the first finger portion (112, 112a) and/or the second finger portion (112, 112b) has a contact sensor that detects a contact with the object (W) to be grasped.

5. The robot (1) according to any one of claims 1 to 4, wherein the control unit (20) is configured so as to end control after a lapse of a predetermined period of time from when the first finger portion (112, 112a) and the second finger portion (112, 112b) are brought close to each other and grasp the object (W) to be grasped.

6. A robot system comprising:
a robot (1) having a robot body (10), an arm (11) provided on the robot body (10), an end effector (110) provided at a distal end of the arm (11) and having a first finger portion (112, 112a) and a second finger portion (112, 112b), and a force detecting unit that detects a force applied to the end effector (110); and
a control unit (20) that drives the arm (11) and the end effector (110) based on the force detected by the force detecting unit,
wherein the control unit (20) brings the first finger portion (112, 112a) and the second finger portion (112, 112b) close to each other, and when the first finger portion (112, 112a) is brought into contact with an object (W) to be grasped, moves the arm (11) in a direction where the first finger portion (112, 112a) is provided while the contact between the first finger portion (112, 112a) and the object (W) to be grasped is kept.

7. The robot system according to claim 6, wherein the force detecting unit is a force sensor (102) provided at a distal end of the arm (11).

8. The robot system according to claim 6 or 7, wherein the control unit (20) is configured for grasping the object (W) to be grasped by symmetrically closing the first finger portion (112, 112a) and the second finger portion (112, 112b) .

9. The robot system according to any one of claims 6 to 8, wherein the first finger portion (112, 112a) and/or the second finger portion (112, 112b) has a contact sensor that detects a contact with the object (W) to be grasped.

10. The robot system according to any one of claims 6 to 9, wherein the control unit (20) is configured so as to end control after a lapse of a predetermined period of time from when the first finger portion (112, 112a) and the second finger portion (112, 112b) are brought close to each other and grasp the object (W) to be grasped.

11. A robot (1) configured for being included in the robot system according to any one of claims 6 to 10.

12. A robot control unit (20) configured for controlling a robot (1),
the robot (1) having a robot body (10), an arm (11) provided on the robot body (10), an end effector (110) provided at a distal end of the arm (11) and having a first finger portion (112, 112a) and a second finger portion (112, 112b), and a force detecting unit configured to detect a force applied to the end effector (110),
wherein the robot control unit (20) is configured for performing the following steps of controlling the robot (1):
bringing the first finger portion (112, 112a) and the second finger portion (112, 112b) close to each other,
detecting a contact between the first finger portion (112, 112a) and an object (W) to be grasped based on a force detected by the force detecting unit, and
when the first finger portion (112, 112a) is brought into contact with the object (W) to be grasped, moving the arm (11) in a direction where the first finger portion (112, 112a) is provided while keeping the contact between the first finger portion (112, 112a) and the object (W) to be grasped.

13. A method of controlling a robot (1),
the robot (1) having a robot body (10), an arm (11) provided on the robot body (10), an end effector (110) provided at a distal end of the arm and (11) having a first finger portion (112, 112a) and a second finger portion (112, 112b), and a force detecting unit configured to detect a force applied to the end effector (110),
the method including the following steps:
the first finger portion (112, 112a) and the second finger portion (112, 112b) are brought close to each other,
a contact between the first finger portion (112, 112a) and an object (W) to be grasped is detected based on a force detected by the force detecting unit, and
when the first finger portion (112, 112a) is brought into contact with the object (W) to be grasped, the arm (11) is moved in a direction where the first finger portion (112, 112a) is provided while the contact between the first finger portion (112, 112a) and the object (W) to be grasped is kept.
